# EUROPÄISCHE PATENTSCHRIFT

(11) **EP 1 925 927 B1**
(45) Veröffentlichungstag und Bekanntmachung des Hinweises auf die Patenterteilung: **13.07.2016**
(21) Anmeldenummer: 07022532.1
(22) Anmeldetag: 21.11.2007
(51) Int. Cl.: G01N 15/14

(54) **Vorrichtung zur Begrenzung eines Messvolumens in einem optischen Meßsystems**
Device for limiting a measurement volume in an optical measurement system
Dispositif destiné à la limitation d'un volume de mesure dans un système de mesure optique

(30) Priorität: 22.11.2006 DE 102006054922
(43) Veröffentlichungstag der Anmeldung: 28.05.2008
(73) Patentinhaber: Durag GmbH, 22453 Hamburg (DE)
(72) Erfinder: Nagel, Dagmar, Dr., 22453 Hamburg (DE); Maixner, Uwe, 21357 Barum (DE)
(74) Vertreter: Hauck Patentanwaltspartnerschaft mbB

(56) Entgegenhaltungen:
- DE-A1- 19 510 402
- US-A- 4 690 561
- US-A1- 2002 153 499
- US-A1- 2005 225 766

## Beschreibung

Die Erfindung bezieht sich auf eine Vorrichtung zur Begrenzung eines Meßvolumens in einem optischen Meßsystem nach Anspruch 1.

Vorrichtungen der eingangs erwähnten Art haben ein weites Anwendungsfeld. Sie kommen insbesondere bei der Messung von Feststoff- oder Flüssigkeitsteilchen z.B. in der Atmosphäre, Abgasen und Flüssigkeiten zum Einsatz. Die Messung kann eine Messung einer Mehrzahl Partikel (Ensemblemessung) oder eine Einzelpartikelmessung sein. Die Größe der Partikel kann stark variieren, wobei insbesondere Partikel mit Durchmessern im Bereich von Millimetern bis Nanometern betrachtet werden. Die Meßmethode kann beispielsweise eine optisch abbildende oder eine Streulichtmethode sein. Die Auswertung einer Streulichtmessung erfolgt bevorzugt nach der Mie'schen Streulichttheorie, wobei die Partikel bevorzugt einen Durchmesser von unter einem Millimeter aufweisen und sich nur ein einzelnes Partikel im Meßvolumen befinden sollte.

Für die Detektion von optischen Signalen, die in Form einer scharfen Abbildung aus einem vorbestimmten Meßvolumen erfaßt werden sollen, werden bereits optische und elektronische Komponenten eingesetzt, um dieses Meßvolumen so genau wie möglich zu definieren.

Aus der US 4 011 459 ist eine Vorrichtung zur Begrenzung eines Meßvolumens bekannt. Diese umfaßt Mittel zur Erzeugung eines Lichtstrahls. Ferner ist ein Abbildungssystem mit einer Objektebene und einer Bildebene vorhanden, wobei die Objektebene so angeordnet ist, daß sie den Lichtstrahl erfaßt. Ein Strahlteiler ist zwischen der Objektebene und der Bildebene angeordnet, um mehrere Bildebenen zu erzeugen. Eine Mehrzahl von Fotosensoren ist jeweils in den Bildebenen angeordnet, die von dem Strahlteiler erzeugt werden, wobei mindestens ein Fotosensor teilweise maskiert ist. Beispielhaft werden zwei Fotosensoren betrachtet. Ein Komparator ist mit den Ausgängen dieser Fotosensoren verbunden. Ferner sind Mittel zum Bereitstellen von Einzelpartikeln in dem Strahl vorhanden. Hierdurch wird das von den Partikeln innerhalb eines bestimmten Meßvolumens ausgehende Streulicht vor allem auf den maskierten Teil des Fotosensors fokussiert und dieser produziert ein Signal geringerer Größe, als der andere Fotosensor. Hierdurch werden akzeptable Daten angezeigt. Das Streulicht der außerhalb des bestimmten Meßvolumens angeordneten Partikel fällt aus dem abgedeckten Bereich heraus und erzeugt ein Signal, das größer als das des anderen Fotosensors ist, wodurch ungültige Daten angezeigt werden.

Bei der bekannten Vorrichtung ist nachteilig, daß die Größe des Meßvolumens nicht variabel und im wesentlichen durch die Größe und Lage der Maske vor einem der Fotosensoren bestimmt ist. Ferner ist die Justage nur durch subjektive Beurteilung der Lage der optischen Bauteile zueinander möglich, da zwei diffuse Abbildungen, nämlich die Abbildung der Maske für das direkte Licht der Lichtquelle und die Abbildung der Maske, vor einem der Fotosensoren zur Deckung gebracht werden müssen. Dazu ist eine abgedunkelte Umgebung notwendig. Die Maskierung erfolgt durch Aufkleben einer Maske auf die dem Fotosensor zugewandten Fläche des Strahlteilers. Die Klebung ist irreversibel und kann nicht korrigiert werden. Die Lage der Maske ist kritisch für die Lage und Größe des Meßvolumens sowie die Qualität der Messung. Daher ist die Montage und Justage mit hohem Aufwand verbunden. Die Herstellung und die Wartung sind kompliziert und teuer durch die Verwendung von zwei einzelnen Fotosensoren, die einem Strahlteiler zugeordnet werden müssen, und durch die erforderliche Justage aller Teile zueinander. Aufgrund ihrer Komplexität ist die Reproduzierbarkeit bzw. Produktionsstabilität der Anordnung (zwei Sensoren, ein Strahlteiler und Maskierung) vermindert. Außerdem ist die Anordnung der Sensoren in 90°-Ausrichtung zueinander an einem Strahlteiler raumgreifend.

Dadurch, daß ein Strahlteiler notwendig ist, um das einfallende Licht auf beide Fotosensoren zu verteilen, steht eine geringere Energiemenge für beide Detektoren zur Verfügung. Dies setzt die Empfindlichkeit des Meßgerätes herab. Die Lage des Strahlteilers im Strahlengang ist kritisch und bestimmt durch die Fertigungs- und Montagetoleranzen die Qualität des Meßergebnisses. Darüber hinaus hat der Strahlteiler eine temperaturempfindliche Klebefläche, die sich ebenfalls nachteilig auf die Meßqualität auswirken kann. So kann sich die Transmission der Klebstoffschicht mit der Temperatur ändern und bei örtlich unterschiedlicher Stärke der Klebstoffschicht kann es infolge unterschiedlicher Temperaturausdehnungen zur Dejustage der optischen Anordnung kommen.

Ferner können Verschmutzungen auf fünf Glasflächen eintreten, nämlich auf dem Strahlteiler mit einer Eintritts- und zwei Austrittsflächen sowie zwei Fotosensoren. Die Reinigung der drei Strahlteilerflächen, insbesondere der Fläche mit der Maske, ist aufwendig und schwierig. Sie erfordert in jedem Fall eine Neujustage aller Elemente.

Die Betriebsstabilität ist bestimmt durch die Stabilität von zwei Fotodetektoren, insbesondere durch ihre Anstiegszeiten, Signalempfindlichkeit, Lebensdauer, Temperaturgang, EMV-Empfindlichkeit und Verschmutzung.

Aus der DE 101 18 913 A1 und US 2002/0153499 A1 ist eine Vorrichtung zur Begrenzung eines Meßvolumens in einem optischen Meßsystem mit einem optischen Abbildungssystem mit einer Objektebene in dem Meßvolumen und einer Bildebene bekannt. Ein optoelektronischer Flächensensor mit Flächensegmenten ist in der Bildebene so angeordnet, daß das Abbildungssystem das Meßvolumen auf mindestens ein Fokussegment abbildet. Ferner ist eine elektronische Auswerteeinrichtung zum Auswerten der von den Flächensegmenten gelieferten elektrischen Signale mit den Flächensegmenten verbunden, zwecks Feststellung, ob diese von einer in dem Meßvolumen angeordneten Lichtquelle stammen.

Die Begrenzung des Meßvolumens resultiert ausschließlich aus der geometrischen Anordnung der optischen Abbildungssysteme. Entweder wird der zeitliche Verlauf von zwei Detektorsignalen verglichen (gleichzeitige Detektorsignale: Streulichtquelle befindet sich im Meßvolumen; nicht gleichzeitige Detektorsignale: Streulichtquelle befindet sich nicht im Meßvolumen) oder es ist nur ein Detektor vorhanden, dessen Sichtfeld mit einem beleuchteten Raumsegment das Meßvolumen bildet. Im letztgenannten Falle stammt jedes Signal automatisch aus dem Meßvolumen. Partikel außerhalb dieses Raumsegments würden kein Signal am Empfänger erzeugen. Der Signalvergleich dient der Bestimmung von Abstand und/oder Geschwindigkeit von Objekten im Meßvolumen und nicht der Feststellung, ob sich diese Objekte im Meßvolumen befinden.

Bei dieser Anordnung ist nachteilig, daß für die Realisierung eines kleinen Meßvolumens, wie es z.B. für die Einzelpartikelmessung notwendig ist, ein hoher Justageaufwand notwendig wäre. Für diese Anwendung ist das System nicht konzipiert. Darüber hinaus ist bei dieser Anordnung das Meßvolumen festgelegt.

Aus DE 197 36 172 B4 ist eine Vorrichtung zur Analyse von Teilchen in einem strömenden Fluid bekannt, bei der eine dreidimensionale Einschränkung des Messvolumens durch die Verwendung von zwei Blenden (eine zur Begrenzung des Strahls von der Lichtquelle, eine zur Begrenzung des Sichtbereichs des Detektors)erreicht wird. Die Form der Blenden ist dabei so gewählt, dass quer zur Strömungsrichtung die Begrenzungsflächen des Messvolumens nicht eben sind. Durch die Bestimmung der resultierenden Signaldauer am Detektor beim Durchtritt von Partikeln durch den Lichtstrahl werden nur die Partikelsignale zur Auswertung herangezogen, deren Durchtrittszeit einen bestimmten Mindestwert übersteigt. Bei genauer Justage der Blenden zum Laserstrahl können auf diese Weise Signale von Partikeln, die bei ihrem Weg durch den Strahlrand nur eine relativ kurze Signalzeit haben, von der Auswertung ausgeschlossen werden.

Nachteilig bei dieser Vorrichtung ist, dass Lichtquelle und Detektor garantiert rechtwinklig zueinander angeordnet sein müssen. Das Verfahren erfordert einen hohen Justageaufwand, insbesondere der Blenden zum Lichtstrahl und zum Detektor, aber auch zueinander. Durch die Verwendung von Blenden kann es zur Entstehung von Beugungserscheinungen kommen, die das Messergebnis u.U. verfälschen können. Das durch die Blendengröße vorbestimmte Messvolumen ist unveränderbar und kann während der Messung nicht der Partikelkonzentration angepasst werden.

Die zur Bewertung herangezogene Signaldauer ist nicht nur von der Strömungsgeschwindigkeit, sondern auch von der Partikelgröße abhängig. Entweder muss die Blende groß im Verhältnis zur Partikelgröße gewählt werden, was sich hinsichtlich der Partikelkonzentration nachteilig auswirkt, oder die Partikelgröße muss bekannt sein, damit eine eindeutige Aussage in Hinblick auf die Einschränkung des Meßvolumens möglich ist.

Aus US 2005/225766 A1 ist eine Vorrichtung zur Bestimmung von biologischen Partikeln in einer flüssigen Probe bekannt, wobei das Messvolumen durch eine Küvette beschränkt ist. Das optische Abbildungssystem realisiert mittels Linsen und Blenden die Objektebene in den Messvolumen und die Bildebene, in der sich ein optoelektronischer, segmentierter Flächensensor befindet.

Die Signale von den Flächensegmenten werden mit geeigneten Mitteln weiter verarbeitet, vorzugsweise mit Methoden der Bildverarbeitung. Dabei werden jedoch nur die Signale einzelner Flächensegmente mit einem vorher definierten Sollwert und/oder mit den Signalen der sie umgebenden Flächensegmente verglichen, ohne dabei zu berücksichtigen, ob sich die Lichtquellen (die beleuchteten biologischen Partikel) wirklich in der Objektebene befinden oder nicht, ob es sich also um eine scharfe Abbildung handelt oder nicht. Nachteilig bei der bekannten Vorrichtung ist, dass nicht eindeutig unterschieden werden kann, ob die Signalhöhe von einzelnen Segmenten oder die Signalbreite bei der Betrachtung mehrerer benachbarter Segmente mit dem gleichen Signalniveau durch ein scharf abgebildetes Partikel oder ein unscharf abgebildetes Partikel oder durch mehrere im optischen Pfad gleichzeitig vorhandene Partikel (nebeneinander oder hintereinander) hervorgerufen wird.

Aus US 2002/153499 A1 ist eine Vorrichtung bekannt geworden, die sich auf einen Rauchmelder nach dem Prinzip der Streulichtmessung bezieht. Wesentliche Aufgabe des bekannten Rauchmelders ist, Geschwindigkeit und Bewegungsrichtung eines von Rauch unterschiedlichen Objekts zu ermitteln und dadurch von Rauch zu unterscheiden. Für diesen Zweck sind zwei lichtempfindliche segmentierte Detektoren vorgesehen. Die optische Anordnung ist derart, dass bei einer Bewegung eines Objekts von einer zur nächsten Position die Beleuchtung der Segmente von einem Segment zum anderen übergeht. Das Messvolumen wird auch in dieser Vorrichtung durch das optische Abbildungssystem, bestehend aus Linsen und Blenden, gebildet, wobei sich die Objektebene in dem von der Lichtquelle beleuchteten Volumen befindet und die Bildebene mit der Lage der segmentierten

Detektoren identisch ist. Die Auswertung der Bildinformation durch eine entsprechend gestaltete Signalverarbeitungseinrichtung zielt nur auf die Erfüllung der Aufgabe ab, die Bewegungsrichtung und -geschwindigkeit des vom Rauch verschiedenen Objekts zu ermitteln. Eine der Anzahlkonzentration solcher Objekte anpassbare Begrenzung des Messvolumens ist jedoch nicht realisiert oder vorgesehen. Sind mehrere Objekte verschieden von Rauch gleichzeitig im beleuchteten Volumen und werden durch das Abbildungssystem gleichzeitig auf die segmentierten Detektoren in der Mitte abgebildet, kann die Vorrichtung ihren Zweck nicht mehr erfüllen.

Die US 4,690,561A beschreibt eine Vorrichtung, die in einem optischen Messsystem sicherstellt, dass die Mitte des Messvolumens exakt auf das Detektorsystem fokussiert ist und die Komponenten Initiallichtstrahl, Messsystem und Detektorsystem zueinander justiert sind. Dazu wird ein zweites Strahlsystem mit einem zusätzlichen Justage-Lichtstrahl durch eine Apertur auf einem segmentierten Detektor abgebildet. Der in maximal vier Sektoren aufgeteilte Sensor wird wie bei einer Zielvorrichtung genutzt (4-Quadranten-Diode) und die Einzelsignale werden miteinander verglichen. Nur die Messsignale, die aus einem bestimmten Bereich des Messvolumens kommen, sollen ausgewertet werden. Hierfür wird das zweite Strahlsystem benutzt, um die richtigen mechanischen Einstellungen an der Optik vornehmen zu können, sodass die Mitte des Messvolumens exakt abgebildet wird. Dabei wird implizit vorausgesetzt, dass dieses zweite Strahlensystem exakt justiert ist, was jedoch nicht zwangsläufig der Fall sein muss.

Davon ausgehend liegt der Erfindung die Aufgabe zugrunde, eine günstigere Herstellungs- und Anwendungseigenschaften aufweisende Vorrichtung zu schaffen, die während der Messung oder nachträglich bei einer Meßdatenbearbeitung eine frei wählbare Begrenzung eines Meßvolumens in einem optischen Meßsystem erlaubt.

Die Aufgabe wird durch eine Vorrichtung mit den Merkmalen des Anspruches 1 gelöst. Vorteilhafte Ausgestaltungen der Vorrichtung sind in den Unteransprüchen angegeben.

Die erfindungsgemäße Vorrichtung zur Begrenzung eines Meßvolumens in einem optischen Meßsystem hat
- ein optisches Abbildungssystem mit einer Objektebene in dem Meßvolumen und einer Bildebene,
- einen optoelektronischen Flächensensor mit Flächensegmenten umfassend mindestens ein Fokussegment und mindestens ein Randsegment, der in der Bildebene so angeordnet ist, daß das Abbildungssystem das Meßvolumen vor allem auf mindestens ein Fokussegment und einen Umgebungsbereich des Meßvolumens vor allem auf mindestens ein Randsegment abbildet, und
- eine elektrisch mit den Flächensegmenten verbundene elektronische Auswerteeinrichtung oder elektronische Datenverarbeitungseinrichtung, die dazu ausgebildet ist, die von dem mindestens einen Fokussegment und dem mindestens einen Randsegment gelieferten elektrischen Signale auszuwerten und festzustellen, ob diese von einer in dem Meßvolumen angeordneten Lichtquelle stammen,
   durch die freie Zuordnung einzelner Flächensegmente zum mindestens einen Fokussegment und zum mindestens einen Randsegment und/oder durch frei wählbare und einstellbare Verstärkung der Einzelsignale von mindestens einem Fokussegment, des Gesamtsignals von allen Fokussegmenten, der Einzelsignale von mindestens einem Randsegment und des Gesamtsignals von allen Randsegmenten sowie durch frei wählbare und einstellbare Kombinationen von beiden Gesamtsignalen und deren Verhältnis zueinander. Die der Feststellung zugrunde liegenden Entscheidungskriterien sind dabei variabel und können der jeweiligen Meß-Situation angepasst werden.

Die Erfindung dient bei optischen Meßverfahren der eindeutigen Begrenzung des Meßvolumens mit dem Ziel, das zu messende Lichtsignal nur dann zuzulassen, wenn sich die Lichtquelle, z.B. ein lichtstreuendes Partikel, in dem Meßvolumen befindet. Das optische Abbildungssystem bildet das Licht nur dann scharf auf den optoelektronischen Flächensensor ab, wenn sich die Lichtquelle im Fokuspunkt bzw. in der Objektebene des optischen Abbildungssystemes befindet. Längs der optischen Achse des optischen Abbildungssystems ist beidseitig des Fokuspunktes ein Unschärfebereich vorhanden, den das optische Abbildungssystem auf den Flächensensor abbildet, so daß eine im Unschärfebereich angeordnete Lichtquelle detektierbar ist. Das Meßvolumen längs der optischen Achse wird um den Fokuspunkt des optischen Abbildungssystems innerhalb dieses Unschärfebereichs definiert. Für die Unterscheidung von Lichtquellen, die sich innerhalb des Meßvolumens befinden, von Lichtquellen, die außerhalb des Meßvolumens angeordnet sind, wird ein optoelektronischer Flächensensor mit mehreren Flächensegmenten herangezogen. Der Flächensensor ist so im Strahlengang zu justieren, daß das zu detektierende Licht einer im Fokuspunkt des Abbildungssystems angeordneten Lichtquelle auf das mindestens eine Fokussegment fokussiert wird. Alle Flächensegmente, die nicht zum Fokussegment gehören, bilden Randsegmente. Licht von einer im Meßvolumen befindlichen Lichtquelle wird von dem Abbildungssystem vor allem auf das mindestens eine Fokussegment und ggf. je nach Größe des Meßvolumens auch auf das mindestens eine Randsegment abgebildet. Licht aus dem dem Meßvolumen längs der optischen Achse benachbarten Unschärfebereich wird von dem optischen Abbildungssystem auf das mindestens eine Fokussegment und vor allem auf das mindestens eine Randsegment abgebildet. Das mindestens eine Fokussegment detektiert im Falle einer scharfen Abbildung einer Lichtquelle aus dem Meßvolumen Licht und erzeugt ein entsprechendes Signal. Das Licht, das ggf. gleichzeitig von dem mindestens einen Randsegment detektiert wird, erzeugt ein schwächeres Signal. Das mindestens eine Randsegment detektiert im Falle einer unscharfen Abbildung Licht und erzeugt ein entsprechendes Signal, das größer ist als das gleichzeitig vom Fokussegment erzeugte Signal.

Anstatt der oder zusätzlich zu der vorstehend beschriebenen Begrenzung des Meßvolumens längs der optischen Achse des optischen Abbildungssystems kann das Meßvolumen in einer oder in mehreren Richtungen quer zur optischen Achse begrenzt werden. Befindet sich nämlich eine Lichtquelle auf der optischen Achse, so wird diese vorrangig auf das mindestens eine Fokussegment abgebildet bzw. beleuchtet dieses. Ist die Lichtquelle in einer Richtung quer zur optischen Achse bezüglich der zuvor betrachteten Position versetzt, so wird das Fokussegment weniger oder gar nicht beleuchtet und dafür mindestens ein Randsegment überhaupt oder mehr beleuchtet. Vorrangig werden dabei Randsegmente beleuchtet, die in derselben Ebene wie der Lichtpunkt bezüglich der optischen Achse angeordnet sind. Dies gilt insbesondere für Positionen der Lichtquelle in der Objektebene, in denen die Lichtquelle auf den Flächensensor fokussiert wird. Dies gilt sinngemäß auch für Positionen der Lichtquelle längs der optischen Achse vor oder hinter der Objektebene, aus denen die Lichtquelle unscharf auf den Flächensensor abgebildet wird. Somit kann das Meßvolumen auch in mindestens einer Richtung quer zur optischen Achse definiert werden, in der der Flächensensor Flächensegmente aufweist.

Die Signale des mindestens einen Fokussegmentes und des mindestens einen Randsegmentes werden von der elektronischen Auswerteeinrichtung ausgewertet. Diese ermittelt, ob sich die Lichtquelle im Meßvolumen längs der optischen Achse oder im Unschärfebereich außerhalb des Meßvolumens und/oder ob sich die Lichtquelle innerhalb der Grenzen des Meßvolumens in mindestens einer Richtung quer zur optischen Achse befindet. Folglich kann das Meßvolumen in einer, in zwei oder in drei Dimensionen eingeschränkt werden und ist hard- und softwaremäßig anpassbar, d.h. variabel. Bei Ermittlung einer Lichtquelle im Meßvolumen wird z.B. eine Streulichtmessung durch Auswertung der Einzelsignale des segmentierten Flächensensors und/oder eine optische Abbildung durch Auslösen einer auf das Meßvolumen fokussierten Kamera ausgelöst.

Für eine dreidimensionale Begrenzung des Meßvolumens kann der Flächensensor konzentrisch zueinander angeordnete kreisförmige oder kreissegmentförmige und/oder kreisringförmige oder kreisringsegmentförmige oder mehreckige und/oder rahmenförmige oder rahmenabschnittsförmige oder mosaikförmige nebeneinander angeordnete Flächensegmente aufweisen.

Die erfindungsgemäße Vorrichtung ermöglicht die genaue Abgrenzung eines Meßvolumens sowohl längs als auch quer zur optischen Achse mit nur einem einzigen fotoelektronischen Bauteil. Sie ermöglicht ein variables Meßvolumen durch verschiedene Zuordnungen der Flächensegmente zu den Fokussegmenten und den Randsegmenten und die frei wählbare Verstärkung der Einzelsignale sowie die frei wählbare Kombination der so verstärkten Signale mit einer entsprechenden Auswerteelektronik oder Datenverarbeitung. Damit kann das Messvolumen hard- und softwaremäßig den Umgebungsbedingungen sowohl während der Messung als auch bei einer Datennachbearbeitung (post-processing) angepasst werden. Es ist variabel. Ein Vorteil liegt darin, dass quasi ein beliebiges Raumsegment um die optische Achse oder neben der optischen Achse aus einem Volumen eingegrenzt werden kann. Man ist also weitgehend unabhängig von Größe, Form und Energieverteilung einer Lichtquelle zum Beleuchten eines Meßvolumens, weil man sich den für die Messaufgabe interessanten Bereich definieren kann. Der Rest wird "ausgeblendet" - ohne Blende und allen damit verbundenen Nachteilen, wie z.B. Beugung. Eine präzise Justage ist möglich durch Maximierung des Signals des mindestens einen Fokussegmentes, d.h. ein eindeutiges objektives Kriterium. Eine subjektiv zu beurteilende optische Justage entfällt. Es ist auch kein Strahlteiler mit durch Fertigungstoleranzen fehlerbehafteter und temperaturempfindlicher Klebefläche erforderlich. Hingegen hat die Vorrichtung eine höhere Empfindlichkeit als die herkömmliche Vorrichtung mit Strahlteiler, da die Gesamtenergiemenge des Meßsignals für die Auswertung zur Verfügung steht.

Es entfällt auch die Maskierung und Justage einer Maske oder von Blenden und der damit verbundene Aufwand. Im Vergleich zu den fünf Glasflächen bei der herkömmlichen Vorrichtung aus US 4,011,459 ist nur eine Glasfläche auf dem Fenster des Flächensensors vorhanden, die verschmutzten kann. Im Gegensatz zur herkömmlichen Vorrichtung kann diese eine Glasfläche relativ einfach mit einer Antireflexbeschichtung versehen werden und damit eine erhöhte Photonenausbeute erreicht werden. Des weiteren ist eine Verbesserung der Betriebsstabilität zu verzeichnen, da die Flächensegmente in einem einzigen Flächensensor zusammengefaßt sind und keine Unterschiede im Temperaturgang haben. Falls bei hohen Umgebungstemperaturen und/oder zur Steigerung der Sensorempfindlichkeit eine Kühlung erforderlich wird, kann dies einfacher mit geringerem Aufwand erfolgen. Aufgrund der geringeren Komplexität der Vorrichtung ist eine verbesserte Reproduzierbarkeit bzw. Produktionsstabilität der Vorrichtung gegeben.

Die Herstellung und Wartung der erfindungsgemäßen Vorrichtung ist einfacher, preiswerter und sicherer als bei der herkömmlichen Vorrichtung mit einzelnen Fotosensoren, da kein Strahlteiler und keine Justage mehrerer Fotosensoren erforderlich ist. Schließlich ist die Bauweise platzsparender als bei der herkömmlichen Vorrichtung, da nur noch ein Fotosensor und kein Strahlteiler vorhanden ist.

Gemäß einer Ausgestaltung hat die Vorrichtung eine elektronische Auswerteeinrichtung oder elektronische Datenverarbeitungseinrichtung zum freien Auswählen der Größe des Meßvolumens während der Messung und/oder bei einer nachträglichen Meßdatenbearbeitung. Gemäß einer weiteren Ausgestaltung weist die Vorrichtung eine elektronische Auswerteeinrichtung oder elektronische Datenverarbeitungseinrichtung auf, bei der das Meßvolumen auf die folgenden Weisen hard- und/oder softwaremäßig variierbar ist:
- durch die freie Zuordnung der einzelnen Flächensegmente zu mindestens einem Fokussegment und zu mindestens einem Randsegment und/oder
- durch frei wählbare oder einstellbare Verstärkung des Gesamtsignals von mindestens einem Fokussegment und des Gesamtsignals von mindestens einem Randsegment sowie Kombinationen von beiden und deren Verhältnis zueinander.

Die Erfindung gestattet die freie Auswahl und Verstärkung des Meßvolumens während der Messung. Erfolgt eine nachträgliche Bearbeitung der Meßdaten mit einem Datenerfassungssystem oder einer entsprechenden Software, ist auch eine nachträgliche freie Auswahl und Verstärkung des Meßvolumens möglich. Dies erlaubt eine flexible Anpassung an die Konzentration der Meßobjekte, z.B. von Partikeln in einem strömenden Medium.

Gemäß einer Ausgestaltung ist der der Erfindung zugrunde liegende Flächensensor derart ausgeführt, daß sich die Ränder der einzelnen Flächensegmente durch Ineinandergreifen überlappen. Durch den Grad der Überlappung kann die Grenze zwischen den Flächensegmenten, z.B. zwischen dem mindestens einen Fokussegment und dem mindestens einen Randsegment sehr klein gehalten werden. Damit ist die geometrische Position des Übergangs von einem Segment zum nächsten genau bestimmbar und weitgehend unabhängig von den in der Halbleiterherstellung technologisch bedingten Lücken (gaps) zwischen den Segmenten, die zur elektrischen Trennung voneinander benötigt werden.

Die Erfindung bezieht verschiedene Ausgestaltungen des Flächensensors ein. Die Flächensegmente können grundsätzlich eine beliebige geometrische Form aufweisen. Gemäß einer Ausgestaltung weist er mehrere konzentrisch zueinander angeordnete, kreis(segment)förmige und/oder kreisring(segment)förmige oder mehreckige und/oder rahmen(abschnitts)förmige Flächensegmente auf, wobei ein zentrales kreisförmiges oder mehreckiges oder mindestens ein zentrales kreisring(abschnitts)förmiges oder rahmen(abschnitts)förmiges Flächensegment von mindestens einem kreisring(segment)förmigen oder mehreckigen oder rahmen(abschnitts)förmigen Flächensegment umschlossen wird. Gemäß einer Ausgestaltung sind die Ränder der einzelnen Flächensegmente mäanderförmig einander überlappend ausgeführt.

Gemäß einer anderen Ausgestaltung weist der Flächensensor mehrere Flächensegmente auf, die mosaikartig nebeneinander angeordnet sind. Gemäß einer weiteren Ausgestaltung sind die Flächensegmente mehreckig, insbesondere rechteckig. Gemäß einer weiteren Ausgestaltung haben mehreckige Flächensegmente parallel zueinander angeordnete Seiten.

Grundsätzlich kommt jedoch auch jede andere geometrische Form für die Gestaltung der Flächensegmente des Sensors und ihrer überlappenden Ränder in Betracht.

Gemäß einer Ausgestaltung ist das mindestens eine Fokussegment mindestens ein zentrales Flächensegment des Flächensensors.

Gemäß einer anderen Ausgestaltung ist das mindestens eine Fokussegment azentrisch bezüglich der Flächensegmente des Flächensensors angeordnet.

Bei den vorstehenden Ausgestaltungen erfolgt die Festlegung der Fokussegmente, indem das Licht aus dem Meßvolumen auf mindestens ein als Fokussegment definiertes Flächensegment fokussiert wird.

Gemäß einer Ausgestaltung umfaßt der Flächensensor zusätzlich zu den bereits genannten Flächensegmenten mindestens ein äußeres Randsegment, das elektrisch mit der Auswerteeinrichtung verbunden ist, zur Abbildung von Bereichen am Rand bzw. außerhalb des Meßvolumens quer zum einfallenden Lichtstrahl, zur Kompensation von Meßsignalschwankungen und/oder Detektion von durch EMV beeinflußten Signalen und/oder Ermittlung von Hintergrundsignalen. Hintergrundsignale können z.B. durch Lichtstreuung an Luftmolekülen in der Umgebung des Meßvolumens entstehen. Detektiert das äußere Randsegment ein Signal einer Höhe, die der Signalhöhe eines normalen Meßsignals entspricht, so kann dies als Kriterium für das Verwerfen der Signale des Flächensensors aufgrund der Beeinflussung durch EMV genutzt werden. Signalschwankungen des äußeren Randsegments, die auf äußere Einflüsse wie z.B. Temperaturschwankungen zurückzuführen sind, können zur Kompensation entsprechender Signalschwankungen aller anderen Flächensegmente genutzt werden. Hierdurch wird die Ermittlung von Lichtquellen im Meßvolumen weiter verbessert.

Die Erfindung bezieht verschiedene Ausführungen des Flächensensors ein, z.B. als Flächen-Fotowiderstand oder Flächen-Fototransistor. Gemäß einer Ausgestaltung ist der Flächensensor ein segmentiertes Flächenfotoelement, insbesondere eine segmentierte Flächenfotodiode (auch Mehrquadrantenfotodiode oder Mehrsegmentfotodiode genannt).

Zur Unterscheidung der Signale einer mehr oder weniger scharfen oder mehr oder weniger unscharfen Abbildung weist gemäß einer Ausgestaltung die Auswerteeinrichtung einen Komparator mit einer Einspeisung der Signale einiger oder sämtlicher Flächensegmente oder eines daraus abgeleiteten Signals und einer Einspeisung der Signale einiger oder sämtlicher Randsegmente auf. Ermittelt beispielsweise der Komparator, daß das Signal aller Flächensegmente oder das Signal aller Fokussegmente größer ist als das Signal der Randsegmente, so liegt eine scharfe Abbildung vor, anderenfalls eine unscharfe Abbildung. Ein direkter Signalvergleich eines oder mehrerer Randsegmente mit dem Signal von einem oder mehreren Fokussegmenten durch einen weiteren Komparator kann genutzt werden, um zu entscheiden, ob sich eine Lichtquelle quer zur optischen Achse im Messvolumen befindet oder nicht.

Gemäß einer weiteren Ausgestaltung weist die Auswerteeinrichtung eine Steuer- und/oder Verstärkungseinrichtung mit einer Einspeisung der Signale einiger oder sämtlicher Flächensegmente auf, die ausgangsseitig an den Komparator angeschlossen ist, der das Ausgangssignal mit dem Signal einiger oder sämtlicher Randsegmente vergleicht. Ist beispielsweise am Ausgang der Steuer- und/oder Verstärkungseinrichtung das Signal sämtlicher Flächensegmente größer als das der Randsegmente, liegt eine scharfe Abbildung vor, anderenfalls eine unscharfe.

Hierfür weist gemäß einer weiteren Ausgestaltung die Auswerteeinrichtung eine weitere Steuer- und/oder Verstärkungseinrichtung mit einer Einspeisung der Signale einiger oder sämtlicher Randsegmente auf, die ausgangsseitig an den Komparator angeschlossen ist.

Gemäß einer weiteren Ausgestaltung umfaßt die Auswerteeinrichtung mit einer Einspeisung der Signale einer beliebigen Anzahl von Flächensegmenten (mit Ausnahme des äußersten Randsegmentes, welches aufgrund der Geometrie der Anordnung kein direktes Meßsignal liefert) oder eines daraus abgeleiteten Signals Mittel zum Durchführen einer Streulichtauswertung zur Ermittlung der Anzahl und/oder der Größe der Lichtquellen, die sich im Meßvolumen befinden, nach der Mie'schen Streulichttheorie. Die Ermittlung der Größe wird ausgelöst, wenn die Auswerteeinrichtung die Anwesenheit eines Partikels im Meßvolumen feststellt.

Gemäß einer weiteren Ausgestaltung weist die Auswerteeinrichtung Mittel zum Signalisieren an ein optisch abbildendes System, das sich eine Lichtquelle im Meßvolumen befindet, auf. Das optisch abbildende System ist z.B. eine Kamera, deren Aufnahmemodus durch ein Signal (z.B. einen Spannungsimpuls) ausgelöst wird.

Grundsätzlich ist es möglich, daß die Vorrichtung mit Umgebungslicht arbeitet, das von einem im Meßvolumen angeordneten Partikel in Richtung der Achse des optischen Abbildungssystem gestreut wird. In diesem Fall ist die Initiallichtquelle die Sonne. Gemäß einer Ausgestaltung weist die Vorrichtung eine künstliche Initiallichtquelle auf, die auf das Meßvolumen gerichtet ist und dieses beleuchtet. Die Initiallichtquelle ist z.B. in Richtung der Achse des optischen Abbildungssystems schräg oder senkrecht dazu gerichtet. Falls die Initiallichtquelle in Richtung der optischen Achse gerichtet ist, umfaßt das optische Abbildungssystem bevorzugt eine Maske, die das ungestreut in Richtung der optischen Achse einfallende Licht ausblendet. Die Initiallichtquelle ist z.B. ein/eine Laser, LED, Gasentladungslampe oder eine andere künstliche Lichtquelle.

Ferner kann die Vorrichtung auch zur Messung von Partikeln verwendet werden, die ohne äußere Anregung Licht emittieren, z.B. lichtemittierende Mikroorganismen.

Ferner kann die Vorrichtung auch zur Messung von Partikeln oder Mikroorganismen verwendet werden, die durch beliebige Strahlung stimuliert werden, Licht der mit der Vorrichtung detektierbaren Wellenlänge zu emittieren.

Die Erfindung wird nachfolgend anhand der anliegenden Zeichnungen von Ausführungsbeispielen näher erläutert. Die Zeichnungen zeigen:
- Fig. 1: eine Vorrichtung zur Begrenzung des Meßvolumens in einem optischen Meßsystem in grobschematischer Darstellung;
- Fig. 2: einen Flächensensor mit konzentrisch angeordneten Flächensegmenten in Vorderansicht;
- Fig. 3: einen Flächensensor mit konzentrisch angeordneten Flächensegmenten und äußerem Randsegment in Vorderansicht;
- Fig. 4: einen Flächensensor mit mosaikartig angeordneten Flächensegmenten und zentralem Fokussegment in Vorderansicht;
- Fig. 5: einen Flächensensor mit mosaikartig angeordneten Flächensegmenten und randseitig angeordnetem Fokussegment in Vorderansicht;
- Fig. 6: einen Flächensensor mit Flächensegmenten mit einander überlappenden Rändern in vergrößerter Teilansicht;
- Fig. 7: den Flächensensor mit elektronischer Auswerteeinrichtung gemäß Fig. 1 in einem detaillierteren Blockbild;
- Fig. 8: den Signalverlauf der Randsegmente und sämtlicher Flächensegmente bei dem Flächensensor mit elektronischer Auswerteeinrichtung gemäß Fig. 7 aufgetragen entlang der Achse des optischen Abbildungssystems;
- Fig. 9: das räumliche Energieprofil des Lichtstrahls eines Lasers in einem Koordinatenkreuz gerichtet auf einen Flächensensor mit konzentrisch angeordneten Flächensegmenten in einer Perspektivansicht;
- Fig. 10: die Signale der Flächensegmente des Flächensensors von Fig. 9 in Abhängigkeit von der Position einer von dem Laserstrahl mit dem Energieprofil gemäß Fig. 9 beleuchteten Lichtquelle entlang der Y-Achse des Koordinatensystems von Fig. 9;
- Fig. 11: den Weg einer durch den Lichtstrahl im Scheitel des Energieprofils gemäß Fig. 9 in Richtung der Z-Achse hindurchtretenden Lichtquelle in einem die Strahlungsintensität des Lichtstrahles über der Position quer zur Achse des Lichtstrahles angebenden Diagramm (Fig. 11a) und dazugehörige zeitliche Änderung der Signale der Flächensegmente des Flächensensors gemäß Fig. 9 beim Durchlaufen der Lichtquelle in Richtung der Z-Achse durch den Lichtstrahl (Fig. 11b);
- Fig. 12: den Weg einer durch den Lichtstrahl in einem Randbereich des Energieprofils gemäß Fig. 9 in Richtung der Z-Achse hindurchtretenden Lichtquelle in einem die Strahlungsintensität über der Position quer zur Achse des Lichtstrahles angebenden Diagramm (Fig. 12a) und dazugehörige zeitliche Änderung der Signale der Flächensegmente des Flächensensors gemäß Fig. 9 beim Durchlaufen der Lichtquelle in Richtung der Z-Achse durch den Lichtstrahl (Fig. 12b).

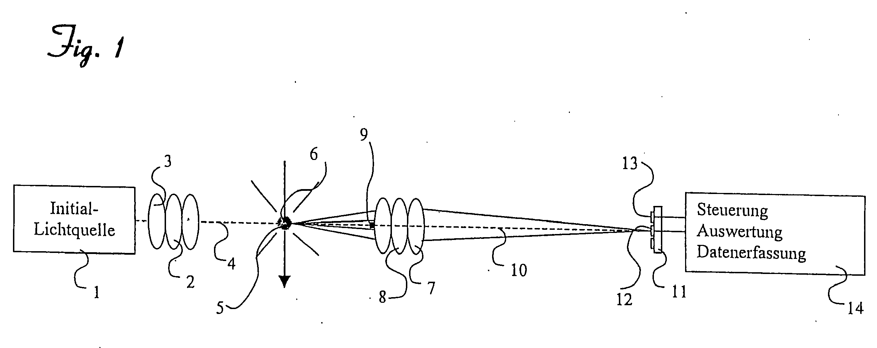

Gemäß Fig. 1 umfaßt die Vorrichtung eine Initiallichtquelle 1 (z.B. einen Laser) und eine Beleuchtungsoptik 2 umfassend ein Linsensystem 3. Diese optische Anordnung 1, 2 leuchtet ein auf ihrer optischen Achse 4 angeordnetes Meßvolumen 5 aus.

Das aus dem Meßvolumen 5 von einem dort anwesenden Partikel 6 gestreute Licht wird von einem optischen Abbildungssystem 7 umfassend ein Sammellinsensystem 8 und eine Maske 9 zum Ausblenden von Direktstrahlung in Richtung der optischen Achse 10 des Abbildungssystems auf einen segmentierten Flächensensor in Form einer Flächendiode 11 abgebildet. Im Beispiel fallen die optischen Achsen 4 und 10 zusammen. Es sind jedoch auch winklige Ausrichtungen der Achsen 4 und 10 möglich, die einander im Meßvolumen 5 schneiden.

Die Flächendiode 11 weist mindestens ein Fokussegment 12 und mindestens ein Randsegment 13 auf. Diese sind elektrisch mit einer elektronischen Auswerteeinrichtung 14 verbunden, die einen Ausgang 15 zu einem Datenerfassungssystem hat. Die Flächensegmente 12 und 13 sind elektrisch voneinander getrennt.

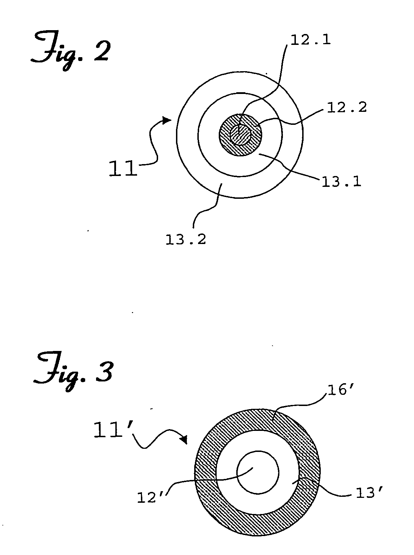

Gemäß Fig. 2 umfaßt ein Ausführungsbeispiel der Flächendiode 11 mit konzentrisch zueinander angeordneten, kreisförmigen bzw. kreisringförmigen Flächensegmenten 12.1, 12.2, 13.1, 13.2, wobei die Flächensegmente 12.1, 12.2 als Fokussegmente und die Flächensegmente 13.1, 13.2 als Randsegmente definiert sind.

Fig. 3 zeigt eine alternative Ausführung, bei der die Flächendiode 11' ein zentrales, kreisförmiges Fokussegment 12' und ein dazu konzentrisches, ringförmiges Randsegment 13' umfaßt. Dieses ist von einem konzentrischen, ringförmigen äußeren Randsegment 16' umgeben. Das äußere Randsegment 16' weist eine Größe und einen definierten Abstand zu den Flächensegmenten 12', 13' auf, so daß Lichteinfall aus dem mit den Flächensegmenten 12', 13' definierten Meßvolumen ausgeschlossen werden kann.

Das Signal des äußeren Randsegmentes 16' kann zur Kompensation von thermisch oder anderweitig verursachten Schwankungen der Signale des Fokussegmentes 12' und des Randsegmentes 13' herangezogen werden. Ferner kann es zur Detektion von EMV-induzierten Signalen oder anderweitigen Fehlsignalen genutzt werden. Ferner kann das Signal des äußeren Randsegmentes 16' dazu herangezogen werden, Streulicht festzustellen, das von im Meßvolumen angeordneten Partikeln aufgrund weiterer künstlicher oder natürlicher Lichtquellen erzeugt wird. Aufgrund der Geometrie der Abbildungsverhältnisse nimmt auch das äußere Randsegment 16' einen Teil des Streulichtes wahr. Das Signal des äußeren Randsegmentes 16' kann zur Korrektur des Hintergrund-Signales herangezogen werden.

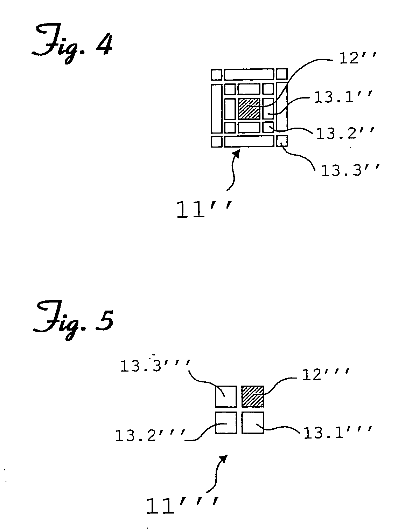

Auch andere geometrische Grundformen können für das Fokussegment 12 und das Randsegment 13 verwendet werden, beispielsweise mehreckige Grundformen. Gemäß Fig. 4 weist der Flächensensor 11" mehrere rechteckige Flächensegmente 12", 13" auf. Hierbei ist das zentrale Flächensegment als Fokussegment 12" und die übrigen Flächensegmente 13.1 " bis 13.n" sind als Randsegmente definiert.

Bei dem Flächensensor 11"' gemäß Fig. 5 ist ein randseitig angeordnetes, rechteckiges Flächensegment das Fokussegment 12"' und sind die übrigen Flächensegmente Randsegmente 13.1"', 13.2"', 13.3"'. Entscheidend ist, daß das Licht auf das als Fokussegment 12'" definierte Flächensegment fokussiert ist, wenn sich die Lichtquelle im Meßvolumen befindet, und die übrigen Randsegmente 13.1"', 13.2"', 13.3"' nur im Falle einer unscharfen Abbildung Licht detektieren können.

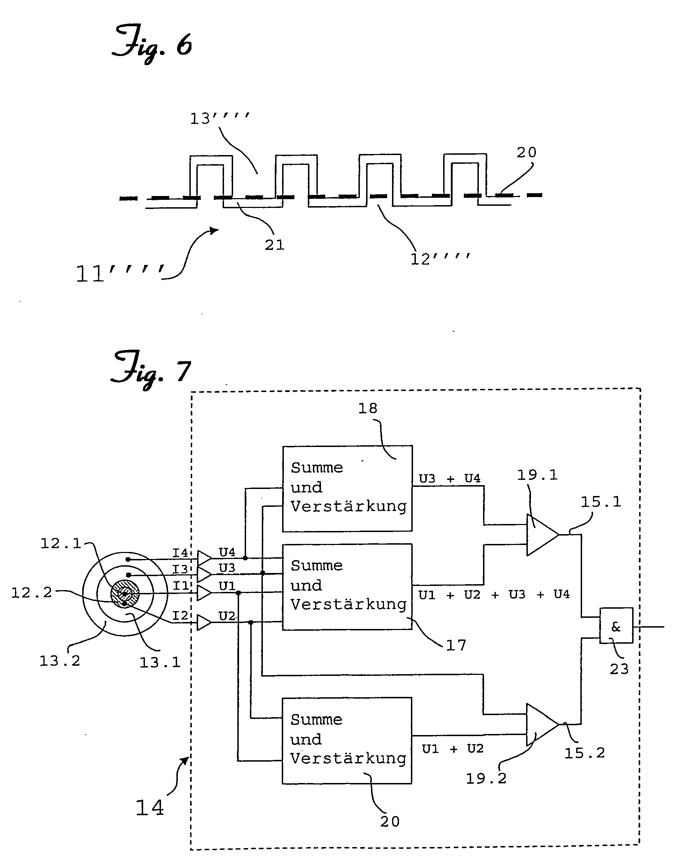

Bei der Gestaltung des Flächensensors 11"" können Übergänge zwischen den Einzelsegmenten überlappend ausgeführt sein. Fig. 6 zeigt ein Beispiel für einen solchen Überlappungsbereich zwischen einem Fokussegment 12"" und einem Randsegment 13"". Durch das mäanderförmige Ineinandergreifen beider Segmente ist der Übergang eine Linie 20 und unabhängig von der Breite der technologisch bedingten Lücken 21, die zur elektrischen Trennung der Einzelsegmente benötigt werden. Jede andere geometrische Form der Überlappungsbereiche, die die Funktion in gleicher Weise realisiert, ist denkbar.

Gemäß Fig. 7 sind die Fokussegmente 12.1, 12.2 und die Randsegmente 13.1, 13.2 des Flächensensors 11 von Fig. 1 an die Eingänge einer Steuer- und Verstärkungseinrichtung 17 der Auswerteeinrichtung 14 angeschlossen. Die Randsegmente 13.1, 13.2 sind an die Eingänge einer weiteren Steuer- und Verstärkungseinrichtung 18 der Auswerteeinrichtung 14 angeschlossen. Die Ausgänge der Steuer- und Verstärkungseinrichtungen 17, 18 sind an die Eingänge eines Komparators 19.1 angeschlossen, der den Ausgang 15.1 aufweist. Befindet sich gemäß Fig. 1 die Quelle des Streulichtes, etwa ein Partikel 6, das durch den Laserstrahl hindurchtritt, genau im Fokus des optischen Abbildungssystems 7, in dessen Bildebene sich der Flächensensor 11 befindet, wird das Streulicht scharf abgebildet, und zwar nur als kleinstmöglicher Lichtfleck auf den Fokussegmenten 12.1, 12.2. Da die Fokussegmente 12.1, 12.2 Bestandteil des Flächensensors 11 sind, bilden sie das Gesamtstreulichtsignal, das anschließend dem Komparator 19.1 zugeführt wird. Hierbei erzeugen die Randsegmente 13.1, 13.2 kein Signal.

Erst wenn sich die Streulichtquelle in einer gewissen Entfernung von der Objektebene befindet, erreicht durch die Unschärfe der Abbildung auch Streulicht die Randsegmente 13.1, 13.2. Dieses Signal trägt zum Gesamtsignal der Steuer- und Verstärkungseinrichtung 17 bei, wird aber auch mittels der weiteren Steuer- und Verstärkungseinrichtung 18 spezifisch verstärkt und dem Komparator 19.1 zugeführt.

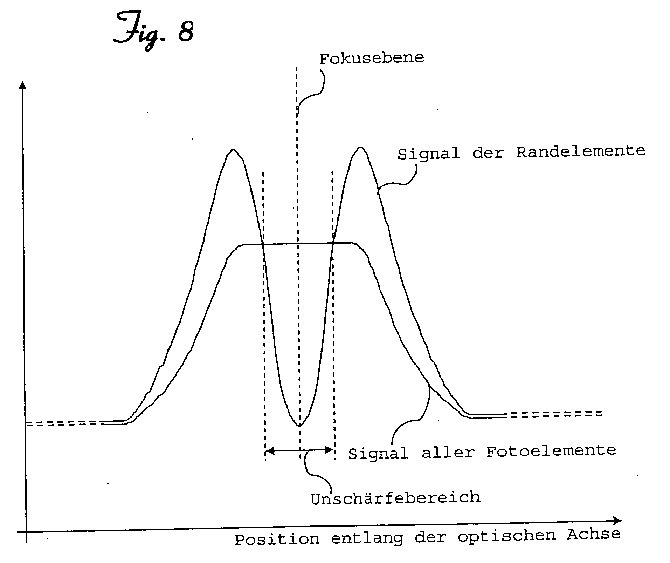

Das Signal der Randsegmente 13.1, 13.2 wird hierbei in 18 derart verstärkt, daß das von der Einrichtung 17 verstärkte Gesamtstreulichtsignal und das Streulichtsignal der Randsegmente bei einem definierten Abstand (Ränder des Meßvolumens 5) von der Fokusebene gleich groß sind. Dadurch werden die Ränder des Meßvolumens entlang der optischen Achse des Abbildungssystems eindeutig definiert. Innerhalb dieses Abstandes soll das verstärkte Signal der Randsegmente 13.1, 13.2 kleiner und außerhalb dieses Bereiches größer als das verstärkte Gesamtstreulichtsignal sein. Die Einzelsignale müssen derart verstärkt werden, daß diese Relation über den gesamten, von der Lichtquelle durchstrahlten Partikelstrom gültig ist, das heißt auch in größerem Abstand vom eigentlichen Meßvolumen. Dies ist in Fig. 8 dargestellt.

Durch den Vergleich beider Signalspannungen im Komparator 19.1 wird der Bereich, in dem das Signal der Randsegmente 13.1, 13.2 kleiner ist als das Gesamtstreulichtsignal, als Meßvolumen längs der optischen Achse definiert. Seine Größe ist bestimmt durch das Abbildungssystem 7, die Größe der Fokussegmente 12.1, 12.2, den Abstand der Fokussegmente 12.1, 12.2 von den Randsegmenten 13.1, 13.2 sowie die Verstärkung der Signale. Damit läßt sich sowohl durch das Design der Flächensegmente 12.1, 12.2 (kleinster Durchmesser) als auch durch das Zusammenfassen zum Fokussegment 12 das Meßvolumen variieren.

Wird also die Fläche der Fokussegmente 12.1, 12.2 verringert (vergrößert), vergrößert (verringert) sich auch die Fläche der Randsegmente 13.1, 13.2. Die Verstärkung des Summensignals sämtlicher Flächensegmente wie auch des Summensignals der Randsegmente muß entsprechend Fig. 8 angepaßt werden. Dies kann sowohl hardwaremäßig als auch softwaremäßig erfolgen, sofern das Gesamtstreulichtsignal und das Gesamtsignal der Randsegmente mittels Datenerfassungsrechner einzeln zur Verfügung stehen. Die Signalauswertung kann sowohl während der Messung als auch nachträglich erfolgen. Für eine nachträgliche Signalauswertung müssen die Signale zunächst durch das Datenerfassungssystem gespeichert werden.

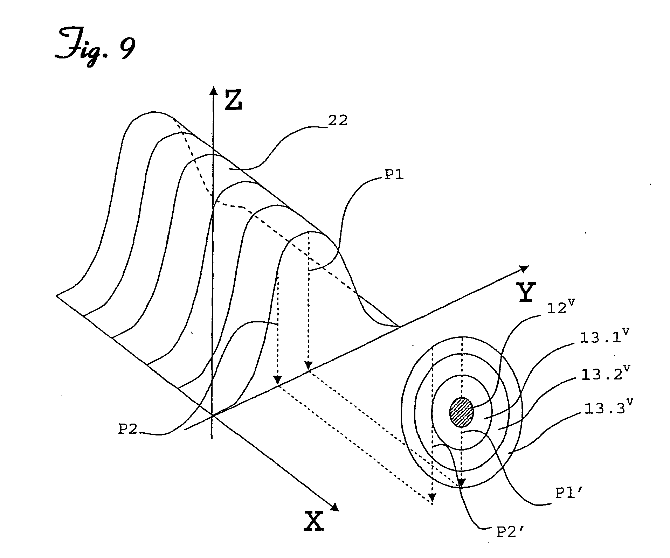

Die Fig. 9 zeigt das gaußförmige Energieprofil eines Lichtstrahles 22 im Koordinatenkreuz mit Ausbreitungsrichtung X, die hier parallel zur optischen Achse ist. Beispielhaft sind zwei mögliche Wege Pa und P2 von Streulichtquellen in Richtung-Z durch den Laserstrahl 22 und die Wege der entsprechenden Abbildungen P1' und P2' auf konzentrisch angeordneten ringförmigen Flächensegmenten 12^{V}, 13.1^{V} bis 13.3^{V} eines Flächensensors 11^{V} gezeigt.

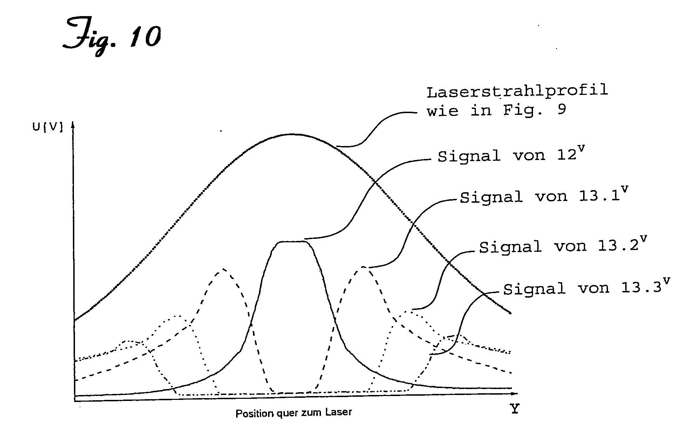

Die Fig. 10 zeigt die Änderung der (Spannungs-)Signale der einzelnen, als Dioden ausgeführten Flächensegmente 12^{V}, 13.1^{V} bis 13.3^{V} entlang der Y-Achse, d.h. quer zur optischen Achse. Zusätzlich ist das Laserstrahlprofil eingezeichnet. Vergleicht man die Signalhöhe der Flächensegmente 12^{V}, 13.1^{V} bis 13.3^{V} an einer beliebigen Stelle Y lassen sich unterschiedlich große "gültige" und "ungültige" Bereiche für das Meßvolumen quer zum Lichtstrahl 22 definieren.

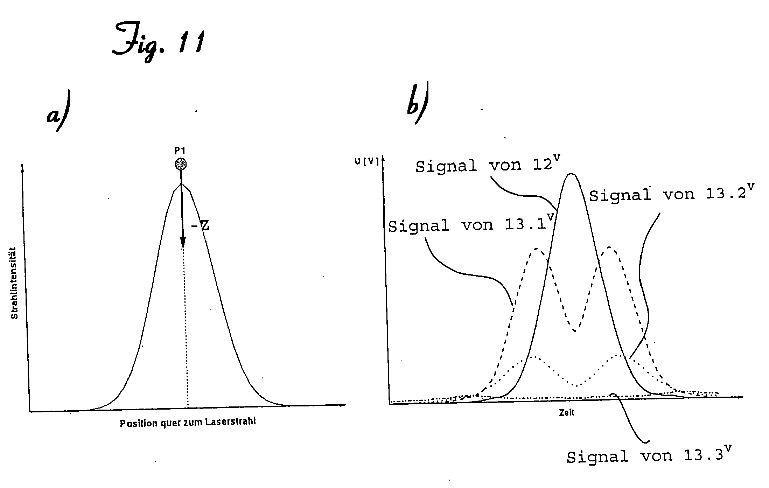

Fig. 11a zeigt wie in Fig. 9 den Weg einer Strahlungs- bzw. Streulichtquelle P1, z.B. eines Partikels, durch die Mitte eines Lichtstrahls 22 mit gaußförmigem Energieprofil. Fig. 11b zeigt die zugehörige zeitliche Änderung der einzelnen Spannungssignale der Flächensegmente 12^{V}, 13.1^{V} bis 13.3^{V} während des Durchtritts der Streulichtquelle P1 durch den Lichtstrahl 22. Wird das Maximum des Signals vom Flächensegment 12^{V} erreicht (U12 = Maximum), läßt sich feststellen, daß das Signal U3 vom Flächensegment 13.1^{V} kleiner ist als das Signal vom Flächensegment 12^{V}. Eine entsprechende Auswerteelektronik ist in Fig. 7 mit dargestellt. Das Signal U12 wird in Fig. 7 durch die Summe der Signale U1 und U2 der beiden Fokussegmente 12.1 und 12.2 dargestellt und mit dem Signal des Randsegments 13.1, nämlich mit U3 am Komparator 19.2 verglichen. Das Ergebnis des Vergleichs wird über den Ausgang 15.2 an die nachgeschaltete Auswertelogik 23 bzw. direkt an das Datenerfassungssystem übergeben. Ist das Signalverhältnis U12 > U3 das Kriterium für "gültige" Ereignisse, so ist dies hier gegeben.

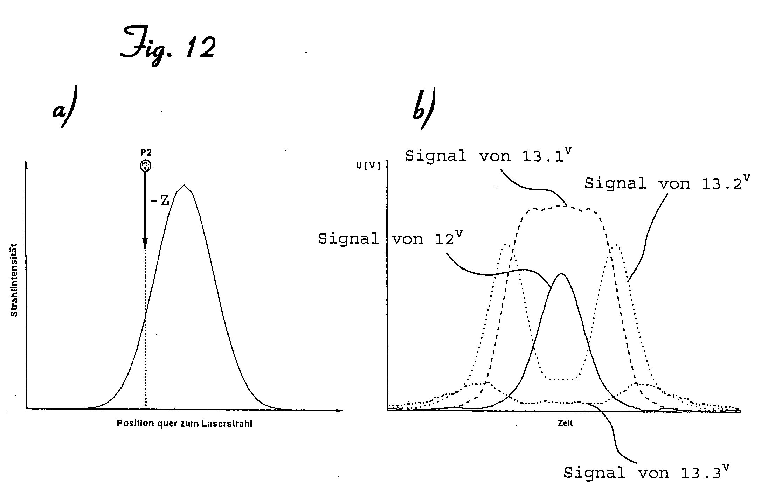

Fig. 12 betrifft den Weg einer Streulichtquelle P2 durch den Rand des Lichtstrahls 22. Ist das Maximum des Signals U12 vom Flächensegment 12 ^{V} erreicht, gilt U12 < U3. Damit handelt es sich hierbei um ein "ungültiges" Ereignis.

Zusammen mit dem Vergleichsergebnis vom Komparator 19.1 am Ausgang 15.1 ergibt sich eine Gesamtinformation über die Lage der Lichtquelle innerhalb oder außerhalb des Messvolumens.

## Patentansprüche

1. Vorrichtung zur Begrenzung eines Messvolumens (5) in einem optischen Messsystem, z.B. für die Messung von einem oder mehreren Partikeln im Messvolumen mit
• einem optischen Abbildungssystem (7) mit einer Objektebene in dem Messvolumen (5) und einer Bildebene,
• einem optoelektronischen Flächensensor (11) mit Flächensegmenten (12, 13) umfassend mindestens ein Fokussegment (12) und mindestens ein Randsegment, der in der Bildebene so angeordnet ist, dass das Abbildungssystem (7) das Messvolumen (5) vor allem auf mindestens ein Fokussegment (12) und einen Umgebungsbereich des Messvolumens (5) vor allem auf mindestens ein Randsegment (13) abbildet und
• einer elektrisch mit den Flächensegmenten (12, 13) verbundenen elektronischen Auswerteeinrichtung (14) oder elektronischen Datenverarbeitungseinrichtung, **dadurch gekennzeichnet, dass**
• die Auswerteeinrichtung (14) oder Datenverarbeitungseinrichtung dazu ausgebildet ist, die von dem mindestens einen Fokussegment (12) und dem mindestens einen Randsegment (13) gelieferten elektronischen Signale auszuwerten und festzustellen, ob diese von einer in dem Messvolumen (5) angeordneten Lichtquelle (6) stammen und das Messvolumen (5) auf die folgenden Weisen hard- und/oder softwaremäßig zu variieren:
• durch die freie Zuordnung der einzelnen Flächensegmente (12, 13) zum mindestens einen Fokussegment (12) und zum mindestens einen Randsegment (13) und/oder
• durch frei wählbare und einstellbare Verstärkung
a.) der Einzelsignale von mindestens einem Fokussegment (12),
b.) des Gesamtsignals von allen Fokussegmenten (12),
c.) der Einzelsignale von mindestens einem Randsegment (13), und
d.) des Gesamtsignals von allen Randsegmenten (13),
• sowie durch frei wählbare Kombinationen der verstärkten Einzelsignale oder durch frei wählbare und einstellbare Kombinationen von beiden Gesamtsignalen und deren Verhältnis zueinander.

2. Vorrichtung gemäß Anspruch 1, bei der die Ausführung des Flächensensors (11) aus mindestens einer der folgenden Ausführungen ausgewählt ist:
- Ausführung mit mehreren konzentrisch zueinander angeordneten, kreis(segment)förmigen und/oder kreisring(segment)förmigen Flächensegmenten (12, 13),
- Ausführung mit mehreren mehreckigen und/oder rahmen(abschnitts)förmigen Flächensegmenten,
- Ausführung mit mehreren Flächensegmenten (12", 13"), die mosaikartig nebeneinander angeordnet sind oder
- Ausführung, bei der mehreckige Flächensegmente (12"', 13"') parallel zueinander angeordnete Seiten haben.

3. Vorrichtung nach Anspruch 1 oder 2, bei der die Flächensegmente (12, 13) durch Ineinandergreifen überlappende Randbereiche haben.

4. Vorrichtung nach einem der Ansprüche 1 bis 3, bei der das Fokussegment (12) im Zentrum der Flächensegmente oder (12"") azentrisch bezüglich der Flächensegmente angeordnet ist.

5. Vorrichtung nach einem der Ansprüche 1 bis 4, bei der der Flächensensor (11') mindestens ein äußeres Randsegment (16') aufweist, das elektrisch mit der Auswerteeinrichtung (14) verbunden ist, zur Kompensation von Messsignalschwankungen und/oder Detektion von EMV-induzierten Signalen und/oder Ermittlung von Hintergrund-Signalen.

6. Vorrichtung nach einem der Ansprüche 1 bis 5, bei der der Flächensensor (11) ein segmentiertes Flächenfotoelement ist.

7. Vorrichtung nach einem der Ansprüche 1 bis 6, die sämtliche Signale der einzelnen Flächensegmente (12, 13) des Flächensensors (11) separat zur beliebigen hard- und softwaremäßigen Weiterverarbeitung zur Verfügung stellt.

8. Vorrichtung nach einem der Ansprüche 1 bis 7, bei der die Auswerteeinrichtung (14) mindestens einen Komparator (19) mit einer Einspeisung des Signals einiger oder sämtlicher Flächensegmente (12) oder eines daraus abgeleiteten Signals und einer Einspeisung der Signale einiger oder sämtlicher Randsegmente (13) aufweist.

9. Vorrichtung nach Anspruch 8, bei der die Auswerteeinrichtung (14) eine oder mehrere Steuer- und/oder Verstärkungseinrichtungen (17,18,19) mit einer Einspeisung der Signale einiger oder sämtlicher Flächensegmente (12, 13) umfasst, die ausgangsseitig an den mindestens einen Komparator (19) angeschlossen ist, dessen Ausgangssignal (15) einer weiteren Auswertelogik (23) oder einem Datenerfassungssystem direkt zugeführt wird.

10. Vorrichtung nach einem der Ansprüche 1 bis 9, bei der die Auswerteeinrichtung (14) mit einer Einspeisung der Signale einer beliebigen Anzahl von Flächensegmenten (12, 13) oder eines daraus abgeleiteten Signals Mittel zur Durchführung einer Streulichtauswertung zur Ermittlung der Anzahl und/oder der Größe von Lichtquellen, die sich im Messvolumen befinden, oder Mittel zum Signalisieren an ein optisch abbildendes System, dass sich eine Lichtquelle im Messvolumen befindet, aufweist.

11. Vorrichtung nach einem der Ansprüche 1 bis 10 mit einer auf das Messvolumen (5) gerichteten Initiallichtquelle (1), die ein/eine Laser, LED, Gasentladungslampe oder eine andere künstliche oder natürliche Lichtquelle ist.

12. Vorrichtung nach einem der Ansprüche 1 bis 11 mit einer elektronischen Auswerteeinrichtung (14) oder elektronischen Datenverarbeitungseinrichtung zum freien Auswählen der Größe des Messvolumens während der Messung und/oder bei einer möglichen nachträglichen Messdatenbearbeitung.

## Claims

1. A device for limiting a measurement volume (5) in an optical measurement system, e.g. for the measurement of one or more particles in the measurement volume with
• an optical imaging system (7) with an object plane in the measurement volume (5) and an image plane,
• an optoelectronic surface sensor (11) with surface segments (12, 13) comprising at least one focus segment (12) and at least one edge segment, which is arranged in the image plane such that the imaging system (7) images the measurement volume (5) above all onto at least one focus segment (12) and a surrounding area of the measurement volume (5) above all onto at least one edge segment (13) and
• an electronic evaluation apparatus (14) or electronic data processing apparatus connected electrically with the surface segments (12, 13), **characterized in that**
• the evaluation apparatus (14) or data processing apparatus is designed to evaluate the electronic signals delivered by the at least one focus segment (12) and the at least one edge segment (13) and to detect whether they originate from a light source (6) arranged in the measurement volume (5) and to vary the measurement volume (5) using hardware and/or software in the following manners:
• through the free allocation of the individual surface segments (12, 13) to the at least one focus segment (12) and to the at least one edge segment (13) and/or
• through freely selectable and adjustable aplification
a.) of the individual signals of at least one focus segment (12),
b.) of the total signal of all focus segments (12),
c) of the individual signals of at least one edge segment (13) and
d.) of the total signal of all edge segments (13),
• as well as through freely selectable combinations of amplified individual signals or through freely selectable and adjustable combinations of both total signals and their ratio with respect to each other.

2. The device according to claim 1, in which the design of the surface sensor (11) is selected from at least one of the following designs:
- design with several circular-segment-shaped and/or circular-ring-segment-shaped surface segments (12, 13) arranged concentrically to each other,
- design with several polygonal and/or frame-section-shaped surface segments,
- design with several surface segments (12", 13"), which are arranged next to each other in a mosaic-like manner or
- design in which polygonal surface segments (12"', 13"') have sides arranged parallel to each other.

3. The device according to claim 1 or 2, in which the surface segments (12, 13) have edge areas overlapping through interlocking.

4. The device according to one of claims 1 to 3, in which the focus segment (12) is arranged in the center of the surface segments or (12"') eccentrically with respect to the surface segments.

5. The device according to one of claims 1 to 4, in which the surface sensor (11') has at least one outer edge segment (16'), which is connected electrically with the evaluation apparatus (14), for the compensation of measurement signal fluctuations and/or detection of EMC-induced signals and/or identification of background signals.

6. The device according to one of claims 1 to 5, in which the surface sensor (11) is a segmented surface photo element.

7. The device according to one of claims 1 to 6, which makes available all signals of the individual surface segments (12, 13) of the surface sensor (11) separately for any hardware- and software-related further processing.

8. The device according to one of claims 1 to 7, in which the evaluation apparatus (14) has at least one comparator (19) with an infeed of the signal of a few or all surface segments (12) or of a signal derived from it and an infeed of the signals of a few or all edge segments (13).

9. The device according to claim 8, in which the evaluation apparatus (14) comprises one or more control and/or amplification apparatus (17, 18, 19) with an infeed of the signals of a few or all surface segments (12, 13), which is connected on the output side to the at least one comparator (19), the output signal (15) of which is fed directly to a further evaluation logic (23) or a data capturing system.

10. The device according to one of claims 1 to 9, in which the evaluation apparatus (14) with an infeed of the signals of any number of surface segments (12, 13) or of a signal derived from it has means for performing a light scatter evaluation for determining the number and/or the size of light sources, which are located in the measurement volume, or means for signaling an optically imaging system that a light source is located in the measurement volume.

11. The device according to one of claims 1 to 10 with an initial light source (1) directed at the measurement volume (5), which is a laser, LED, gas discharge lamp or another artificial or natural light source.

12. The device according to one of claims 1 to 11 with an electronic evaluation apparatus (14) or electronic data processing apparatus for the free selection of the size of the measurement volume during the measurement and/or in the case of possible subsequent measurement data processing.

## Revendications

1. Dispositif destiné à la limitation d'un volume de mesure (5) dans un système de mesure optique, par exemple pour la mesure d'une ou de plusieurs particules dans le volume de mesure, comprenant
• un système d'imagerie optique (7) avec un plan d'objet dans le volume de mesure et un plan d'image,
• un capteur de surface optoélectronique (11) avec des segments de surface (12, 13) comprenant au moins un segment de focalisation (12) et au moins un segment de bord, lequel est agencé de telle façon dans le plan d'image que le système d'imagerie (7) représente le volume de mesure (5) principalement sur au moins un segment de focalisation (12) et une région environnante du volume de mesure (5) principalement sur au moins un segment de bord (13), et
• un dispositif d'évaluation (14) électronique ou un dispositif de traitement de données relié électriquement aux segments de surface (12, 13), **caractérisé en ce que**
• le dispositif d'évaluation (14) ou le dispositif de traitement de données est conçu pour évaluer les signaux électroniques délivrés par l'au moins un segment de focalisation (12) et l'au moins un segment de bord (13), et pour constater si ceux-ci proviennent d'une source de lumière (6) agencée dans le volume de mesure (5), et pour modifier le volume de mesure (5) des manières suivantes, en fonction d'un matériel informatique et/ou d'un logiciel :
• par l'attribution libre des différents segments de surface (12, 13) à l'au moins un segment de focalisation (12) et à l'au moins un segment de bord (13) et/ou
• par une amplification apte à être sélectionnée et réglée librement
a) des signaux individuels d'au moins un segment de focalisation (12),
b) du signal global de tous les segments de focalisation (12),
c) des signaux individuels d'au moins un segment de bord (13), et
d) du signal global de tous les segments de bord (13),
• ainsi que par des combinaisons aptes à être sélectionnées librement des signaux individuels amplifiés, ou par des combinaisons aptes à être sélectionnées et réglées librement des deux signaux globaux et de leur rapport entre eux.

2. Dispositif selon la revendication 1, dans lequel la conception du capteur de surface (11) est sélectionnée parmi au moins l'une des conceptions suivantes :
- conception avec plusieurs segments de surface (12, 13) en forme de (segment de) cercle et/ou en forme de (segments d')anneau circulaire, disposés de façon concentrique les uns par rapport aux autres,
- conception avec plusieurs segments de surface polygonaux et/ou en forme de (sections de) cadre,
- conception avec plusieurs segments de surface (12", 13") disposés côte à côte en mosaïque, ou
- conception dans laquelle des segments de surface (12"', 13"') polygonaux présentent des côtés agencés parallèlement les uns aux autres.

3. Dispositif selon la revendication 1 ou 2, dans lequel les segments de surface (12, 13) présentent des régions de bords superposées par emboîtement mutuel.

4. Dispositif selon l'une des revendications 1 à 3, dans lequel le segment de focalisation (12) est disposé au centre des segments de surface ou (12"') de façon acentrique par rapport aux segments de surface.

5. Dispositif selon l'une des revendications 1 à 4, dans lequel le capteur de surface (11') présente au moins un segment de bord extérieur (16'), lequel est électriquement relié au dispositif d'évaluation (14), pour compenser des variations de signaux et/ou pour détecter des signaux induits par la CEM et/ou pour déterminer des signaux d'arrière-plan.

6. Dispositif selon l'une des revendications 1 à 5, dans lequel le capteur de surface (11) est un élément photo de surface segmenté.

7. Dispositif selon l'une des revendications 1 à 6, lequel met à disposition tous les signaux des différents segments de surface (12, 13) du capteur de surface (11) séparément, pour un traitement par matériel informatique ou logiciel ultérieur au choix.

8. Dispositif selon l'une des revendications 1 à 7, dans lequel le dispositif d'évaluation (14) présente au moins un comparateur (19) avec une alimentation des signaux d'une partie ou de l'ensemble des segments de surface (12) ou d'un signal dérivé de ceux-ci, et une alimentation des signaux d'une partie ou de l'ensemble des segments de bord (13).

9. Dispositif selon la revendication 8, dans lequel le dispositif d'évaluation (14) comporte un ou plusieurs dispositifs de commande et/ou d'amplification (17, 18, 19) avec une alimentation des signaux d'une partie ou de l'ensemble des segments de surface (12, 13), laquelle est raccordée à l'au moins un comparateur (19) côté sortie, dont le signal de sortie (15) est directement délivré à une autre logique d'évaluation (23) ou à un système d'acquisition de données.

10. Dispositif selon l'une des revendications 1 à 9, dans lequel le dispositif d'évaluation (14), avec une alimentation des signaux d'un nombre au choix de segments de surface (12, 13) ou d'un signal dérivé de ceux-ci, présente des moyens destinés à exécuter l'évaluation d'une lumière diffuse, afin de déterminer le nombre et/ou la taille de sources de lumière situées dans le volume de mesure, ou des moyens destinés à indiquer à un système d'imagerie optique qu'une source de lumière se trouve dans le volume de mesure.

11. Dispositif selon l'une des revendications 1 à 10, comprenant une source de lumière initiale (1) orientée vers le volume de mesure (5), laquelle consiste en un laser, une DEL, une lampe à décharge de gaz ou une autre source de lumière artificielle ou naturelle.

12. Dispositif selon l'une des revendications 1 à 11, comprenant un dispositif d'évaluation (14) électronique ou un dispositif de traitement de données électronique permettant de sélectionner librement la taille du volume de mesure pendant la mesure et/ou lors d'un éventuel traitement de données de mesure consécutif.
